(19) Europäisches Patentamt
European Patent Office
Office européen des brevets

(11) **EP 3 583 021 B1**

(12) **EUROPEAN PATENT SPECIFICATION**

(45) Date of publication and mention
of the grant of the patent:
**08.06.2022 Bulletin 2022/23**

(21) Application number: **18709397.6**

(22) Date of filing: **13.02.2018**

(51) International Patent Classification (IPC):
**B62M 6/50** *(2010.01)* **B62M 6/60** *(2010.01)*

(52) Cooperative Patent Classification (CPC):
**B62M 6/50; B62M 6/60**

(86) International application number:
**PCT/IB2018/050879**

(87) International publication number:
**WO 2018/150324 (23.08.2018 Gazette 2018/34)**

(54) **SYSTEM FOR ESTIMATING THE SLOPE OF A PEDAL-ASSISTED BICYCLE**

SYSTEM ZUR SCHÄTZUNG DER NEIGUNG EINES TRETUNTERSTÜTZTEN FAHRRADS

SYSTÈME D'ESTIMATION DE LA PENTE D'UNE BICYCLETTE ASSISTÉE PAR PÉDALES

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **16.02.2017 IT 201700017602**

(43) Date of publication of application:
**25.12.2019 Bulletin 2019/52**

(73) Proprietor: **ZEHUS S.p.A.**
**20124 Milano (IT)**

(72) Inventors:
• **LISANTI, Paolo**
**20122 Milano (IT)**
• **BERRETTA, Daniele**
**20122 Milano (IT)**
• **SEGATO, Marcello**
**20122 Milano (IT)**

(74) Representative: **Penza, Giancarlo**
**Bugnion S.p.A.**
**Viale Lancetti, 17**
**20158 Milano (IT)**

(56) References cited:
**WO-A1-03/016837      WO-A1-2016/079614
FR-A1- 2 857 444      US-A1- 2016 167 732**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

TECHNICAL FIELD OF THE INVENTION

The present invention concerns the sector of pedal-assisted bicycles, that is, a particular type of bicycle equipped with an electric motor that is suitable for supplying additional power with respect to that provided by the cyclist.

The present invention finds particular, but not exclusive application in the sector of the so-called "all-in-the-wheel" pedal-assisted bicycles, that is, bicycles in which the motor, batteries, sensors and electronic controls are inserted in a single housing associated with a wheel of the bicycle.

In particular, the present invention concerns a system for estimating the slope of a pedal-assisted bicycle, that is, its slope with respect to the horizontal due to the slope of the path followed by the bicycle during its movement.

PRIOR ART

Various control algorithms are known in the field of pedal-assisted bicycles.

In particular, with the development of this type of technology, control algorithms marked by increasing levels of sophistication have been proposed and these control algorithms are aimed at improving comfort for the cyclist and/or increasing the duration of the batteries. At the same time, attempts have been made to reduce sensor components on the bicycle to a minimum, so as to reduce its overall weight and the complexity of the system.

Slope is a particularly significant parameter in terms of controlling the pedal-assisted bicycle, and information on slope is generally used to modify the level of interlock by the electric motor on the bicycle. Providing a special slope sensor is one option that has been used, but an attempt has been made to avoid its use in order to reduce the total number of sensors on the bicycle.

Methods have thus been proposed that make it possible to estimate the slope by using other sensors which are already supplied on the bicycle for control purposes, rather than resorting to a dedicated sensor.

Examples of these methods of the prior art are described in: 1) Ivo Boniolo, Stefano Corbetta, Sergio Savaresi. Attitude estimation of a motorcycle in a Kalman filtering framework. In: Advances in Automotive Control, pages 779-784, 2010. 2) Sergio Savaresi, Ivo Boniolo. Estimate of the lean angle of motorcycles. VDM Verlag, 2010.

First of all, by means of an extended Kalman filter, these methods estimate the lean angle of a motorcycle and they can also be used for estimating the slope of a bicycle by means of signals coming from an inertial measurement unit IMU with 6 degrees of freedom (3 linear accelerations along three perpendicular axes and three angular velocities along the same axes).

Although these methods make it possible to obtain a slope estimation without resorting to a specific slope sensor, they do have drawbacks.

First of all, if the pedal-assisted bicycle is of the "all-in-the-wheel" type, the IMU is positioned in the rear wheel in the same casing that houses the motor. Therefore, the IMU signals can be disturbed when the motor is providing assistance.

Moreover, as the IMU is generally solidly constrained to the bicycle frame, the unevenness of road surfaces generates noise in the IMU signals which can alter slope estimation.

Lastly, the models described assume that the bicycle is moving rectilinearly and they do not consider the dynamics of the bicycle when it is travelling along curves. In particular, the models described do not consider the contributions of centrifugal and centripetal forces, which affect the measurements.

US 2016/167732 A1 discloses a system for estimating the slope of a pedal-assisted bicycle comprising an electric motor connected to a wheel of the bicycle and one or more sensors/modules for generating signals representative of quantities of the bicycle.

SUMMARY OF THE INVENTION

The issue underlying the present invention thus consists in providing a system for estimating the slope of a pedal-assisted bicycle which makes it possible to obtain an accurate estimation of this slope even in the presence of noise or disturbance due to the causes indicated above relating to the signals of the sensors used for this same estimation. This estimation can be used particularly as an input parameter to the control system of the pedal-assisted bicycle, which can adapt the motor command signal based on the detected uphill/downhill condition.

This aim and others as well are achieved by a system for estimating the slope of a pedal-assisted bicycle according to claim 1.

The dependent claims define possible advantageous embodiments of the invention.

## BRIEF DESCRIPTION OF THE DRAWINGS

For a better understanding of the invention and appreciation of the advantages thereof, several non-limiting example embodiments shall be described herein below, referring to the attached figures, of which:

- Figure 1 is a schematic illustration of a pedal-assisted bicycle;
- Figure 2 is a block diagram of a system for estimating slope according to a possible embodiment of the invention;
- Figure 3 is a block diagram of a portion of the system for estimating slope according to a possible embodiment of the invention.

## DETAILED DESCRIPTION OF THE INVENTION

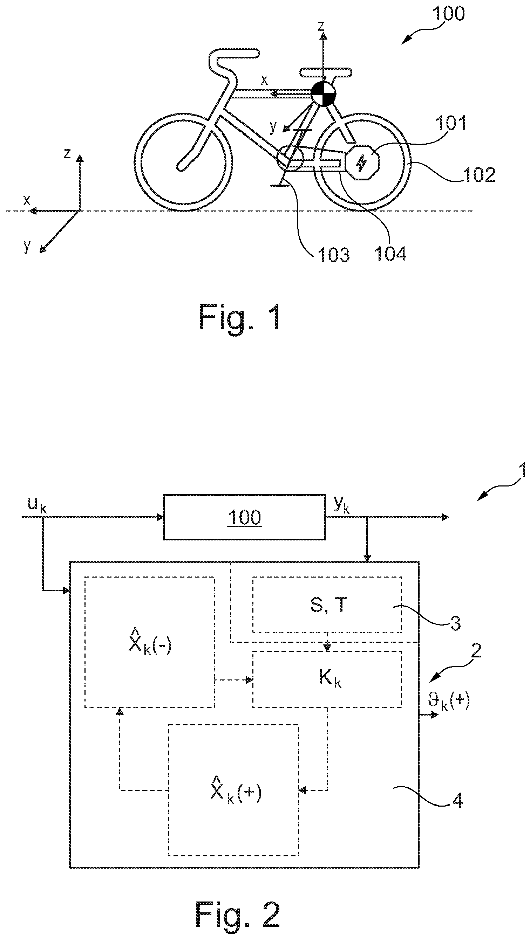

Figure 1 schematically illustrates a pedal-assisted bicycle 100.

The bicycle 100 comprises an electric motor 101 associated with one 102 of the two wheels of the bicycle, preferably the rear wheel.

The bicycle 100 further comprises a pedal-thrust group 103, by means of which the cyclist can supply power to the bicycle, and it is connected to one of the wheels, preferably the same wheel 102 with which the motor 101 is associated, by means of a transmission 104, for example a chain drive transmission.

The bicycle 100 further comprises one or more rechargeable batteries (not shown in the figures) connected to the electric motor 101 in such a manner as to be able to exchange energy with the motor.

The batteries can be separated from the motor 101 or, in accordance with an alternative configuration of the "all-in-one" type, they can be housed inside a common closure body solidly connected to the wheel 102 together with the electric motor 101.

The bicycle 100 comprises a system 1 for estimating the slope of the bicycle, that is, for estimating the angle $\vartheta$ formed by the x axis (coinciding with the roll axis of the bicycle) of an X-Y-Z triad solidly constrained to the frame of the bicycle, with respect to the X axis of a fixed X-Y-Z triad, wherein the X axis is assumed to be perpendicular to gravitational acceleration.

In particular, the system 1 is configured to supply a signal representative of the slope $\vartheta$, which can then be used as input to a control module for controlling the pedal-assisted bicycle motor (not shown in the figures), which is configured to manage the interlock and the recovery of energy.

The system 1 comprises a sensor for detecting the speed $V_x$ of the bicycle, that is, its linear speed along the x axis.

For example, this speed can be determined from the angular velocity $\omega_{wheel}$ of the wheel 102, which can then be detected by a specific angular velocity sensor. The speed $V_x$ can thus be determined by means of the relation $V_x = \omega_{wheel} * R$, in which R is the radius of the wheel 102.

The system 1 further comprises an inertial measurement unit that is configured to measure the longitudinal accelerations of the bicycle according to the x-y-z triad, particularly the longitudinal acceleration $a_x$ (that is, along the roll axis x of the bicycle), lateral acceleration $a_y$ (that is, along the pitch axis y of the bicycle) and vertical acceleration $a_z$ (that is, along the yaw axis z of the bicycle); the inertial measurement unit is thus configured to generate signals representative of the longitudinal $a_x$, lateral $a_y$ and vertical $a_z$ accelerations of the bicycle.

The inertial measurement unit is further configured to detect the angular velocities of the bicycle about the same axes x, y and z and it is configured to generate signals representative of these angular velocities; in particular, the inertial measurement unit is configured to detect the angular velocities of roll $\omega_x$, pitch $\omega_y$ and yaw $\omega_z$ and to generate signals representative of the angular velocities of roll $\omega_x$, pitch $\omega_y$ and yaw $\omega_z$ of the bicycle.

With reference to Figure 2, the system 1 comprises a module 2 for estimating the slope $\vartheta$ (in other words, a slope estimator 2) of the bicycle based on the signals representative of the speed of the bicycle $V_x$, the longitudinal $a_x$, lateral $a_y$ and vertical $a_z$ accelerations and the angular velocities of roll $\omega_x$, pitch $\omega_y$ and yaw $\omega_z$.

In particular, the module 2 comprises an extended Kalman filter 4, which is capable of estimating slope $\vartheta$ based on said signals.

The extended Kalman filter is an extension of the Kalman filter to nonlinear systems.

The Kalman filter is a filter that implements a recursive algorithm that solves the problem of optimal state estimation for discrete-time linear systems with additive Gaussian white noise that acts on the state and the output observations.

In general, the Kalman filter uses a representation of a linear type system in the form of a state:

$$\mathbf{x}_k = A_{k-1}\mathbf{x}_{k-1} + B_k\mathbf{u}_k + \mathbf{w}_k$$

$$\mathbf{y}_k = C_k\mathbf{x}_k + D_k\mathbf{u}_k + \mathbf{v}_k$$

in which:

- k is the discrete instant of time considered;
- **x** is the state of the system;
- u is the input considered;
- **y** is the output of the system;
- **w** is the state disturbance;
- **v** is the measurement disturbance.

By means of a recursive algorithm, the Kalman filter is capable of determining the value assumed by the state **x** at the current instant **k,** based on the knowledge of the current input **u,** of the current output **y** and of the previous estimation of the state **x**. The outputs **y** are connected to the inputs **u** by a descriptive mathematical model of the system. An estimation of the quantities of interest **x** can thus be carried out recursively.

The equations for the resolution of the Kalman filter are as follows:

$$\hat{x}_k(-) = A_{k-1}\hat{x}_{k-1}(+) + B_k u_k$$

$$P_k(-) = A_{k-1}P_{k-1}(+)A_{k-1}^T + Q_{k-1}$$

$$K_k = P_k(-)C_k^T[C_k P_k(-)C_k^T + R_k]^{-1}$$

$$\hat{x}_k(+) = \hat{x}_k(-) + K_k[y_k - C_k\hat{x}_k(-) - D_k u_k]$$

$$P_k(+) = [I - K_k C_k]P_k(-)$$

in which:

-
$$\hat{x}_k(-)$$

and

$$\hat{x}_k(+)$$

are the *a priori* and *a posteriori* estimates of the state vector, respectively;

-
$$P_k(-)$$

and

$$P_k(+)$$

are the respective a priori and a posteriori estimates of the state estimate error covariance matrix,

$$e_k = \hat{x}_k - \hat{x}_k(+)\ ;$$

- $K_k$ is the optimal Kalman filter gain matrix.

The extended Kalman filter is the extension of the Kalman filter to nonlinear systems, which generally comprises linearization of the system to bring it back to the conditions of the unextended Kalman filter.

In general, the representation of the nonlinear system in the form of a state is as follows:

$$\mathbf{x}_k = \mathbf{f}(\mathbf{x}_{k-1}, \mathbf{u}_{k-1}) + \mathbf{w}_k$$

$$\mathbf{y}_k = \mathbf{g}(\mathbf{x}_k, \mathbf{u}_k) + \mathbf{v}_k$$

Without delving too deeply into the theory of the Kalman filter, which is already known per se by persons skilled in the art, the extended Kalman filter comprises linearization of the system reported hereinabove at each instant of time k around the most recently estimated state **x,** to then proceed with the same algorithm used by the Kalman filter for linear systems.

The equations for the resolution of the extended Kalman filter are as follows:

$$P_k(-) = A(\hat{x}, u, k-1)P_{k-1}(+)A(\hat{x}, u, k-1)^T + Q_{k-1}$$

$$K_k = P_k(-)C(\hat{x}, u, k)^T[C(\hat{x}, u, k)P_k(-)C(\hat{x}, u, k)^T + R_k]^{-1}$$

$$\hat{x}_k(+) = \hat{x}_k(-) + K_k[y_k - \hat{y}_k]$$

$$P_k(+) = [I - K_k C(\hat{x}, u, k)]P_k(-)$$

in which:

-
$$\hat{x}_k(-)$$

and

$$\hat{x}_k(+)$$

are the a priori and a posteriori estimates of the state vector, respectively;

-
$$P_k(-)$$

and

$$P_k(+)$$

are the respective a priori and a posteriori estimates of the state estimate error covariance matrix,

$$e_k = \dot{x}_k - \hat{x}_k(+) \; ;$$

- $K_k$ is the optimal Kalman filter gain matrix;
- $Q_k$ and $R_k$ are tuning matrices that model the process noise and the noise of the measured signals, respectively.

For example, in the present case, the system of interest can be represented in the following manner:

$$\mathbf{x} = \begin{bmatrix} \varphi & \vartheta \end{bmatrix}^T$$

$$\mathbf{u} = \begin{bmatrix} \omega_x & \omega_y & \omega_z & g & V_x & V_x \end{bmatrix}^T$$

$$\mathbf{y} = \begin{bmatrix} a_x & a_y & a_z \end{bmatrix}^T$$

in which, in particular, $\vartheta$ and $\varphi$ are the rotations about the roll axis x and the pitch axis y, respectively, and in which the angle $\vartheta$ corresponds to the slope of the bicycle one wishes to estimate.

The state and input-output equations are derived therefrom:

$$\begin{bmatrix} \dot{\varphi} \\ \dot{\vartheta} \end{bmatrix} = \begin{bmatrix} 1 & t_\vartheta s_\varphi & t_\vartheta c_\varphi \\ 0 & c_\varphi & -s_\varphi \end{bmatrix} \begin{bmatrix} \omega_x \\ \omega_y \\ \omega_z \end{bmatrix} + \begin{bmatrix} \eta_\varphi \\ \eta_\vartheta \end{bmatrix}$$

$$\begin{bmatrix} a_x \\ a_y \\ a_z \end{bmatrix} = \begin{bmatrix} -s_\vartheta & c_\vartheta & 0 \\ s_\vartheta c_\varphi & s_\vartheta s_\varphi & (\omega_z c_\varphi^2 + \omega_y s_\varphi c_\varphi)\frac{1}{c_\vartheta} \\ c_\vartheta c_\varphi & s_\vartheta c_\varphi & -(\omega_y s_\varphi^2 + \omega_z c_\varphi s_\varphi)\frac{1}{c_\vartheta} \end{bmatrix} \begin{bmatrix} g \\ V_x \\ V_x \end{bmatrix} + \begin{bmatrix} \eta_{a_x} \\ \eta_{a_y} \\ \eta_{a_z} \end{bmatrix}$$

in which:

- s, c and t are the respective abbreviations for sine, cosine and tangent;
- g is the gravitational acceleration;
- $\eta_{ax}$, $\eta_{ay}$ and $\eta_{az}$ are Gaussian white noises associated with the accelerations along the x, y and z axes.

The module 2 for estimating the slope $\vartheta$ comprises a module 3 for determining correction parameters (in other words, a parameter corrector 3) for the extended Kalman filter 4, particularly for determining correction parameters S and T for correcting the tuning matrices $Q_k$ and $R_k$ and thus the Kalman filter gain $K_k$.

In particular, the module 3 has the function of modifying the nominal parameters for the extended Kalman filter 4 based on the noise of the signals incoming to the module 2 for estimating slope $\vartheta$, which is noise that can alter the estimation.

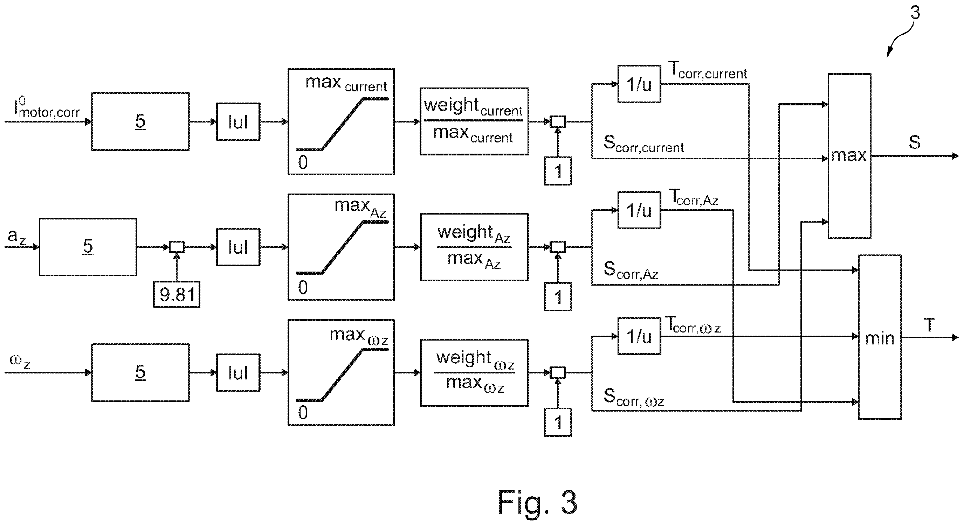

Referring now to Figure 3, the module 3 for determining correction parameters for the extended Kalman filter 4 receives at the input one or more signals representative of quantities relative to the bicycle 100 which can affect the estimation of the slope $\vartheta$ performed by the module 2.

In particular, as shall be seen below, these signals provide an indication of the noise that can affect the estimation performed by the module 2.

The signals representative of the quantities relative to the bicycle can be provided by specific sensors, which shall vary as a function of the control logic adopted, and/or they can be generated by specific modules underlying the operation of the bicycle, for example by the control module for the electric motor or by modules for determining the quantities based on the signals coming from the sensors supplied.

With reference to the example embodiment in Figure 3, for example the module 3 receives at the input:

- the motor command signal $I°_{motor,corr}$, the presence of which indicates that the motor is active and can therefore generate vibrations which can affect the signals coming from the inertial measurement unit;
- the signal representative of the vertical acceleration $a_z$ which can contain noise for example due to the roughness of the road surface;
- the signal representative of the angular velocity $\omega_z$, which represents the fact that the bicycle is travelling around a curve.

Of course, only one or more of the signals indicated above, and/or additional signals not expressly indicated here can be provided at the input to the module 3, according to that which has been stated above.

For example, with reference to the processing of the motor command signal $I°_{motor,corr}$, which is specifically a current signal, the module 3:

- performs a process of filtering it in a filter 5, particularly a low-pass filter;
- determines its absolute value $|u|$;
- if necessary, saturates the absolute value $|u|$ between 0 and the maximum current value $max_{current}$ that can be required of the motor;
- determines a weight $weight_{current}$ representative of the entity of the noise associated with the motor command signal $I°_{motor,corr}$ based on the value of the latter between 0 and $max_{current}$, possibly normalizing it based on the maximum value $max_{current}$;
- assigns the weight value to a first correction coefficient associated with the motor command signal $S_{corr,current}$ and the inverse of the weight value $(1/u)$ to a second correction coefficient associated with the motor command signal $T_{corr,current}$.

Note that preferably a constant value greater than 0, for example the value of 1, is added to the weight determined according to said procedures, so that in the case in which the resulting weight is equal to 0, the value of 1 is assigned to the correction coefficients $S_{corr,current}$ and $T_{corr,current}$, so that the gain $K_k$ of the Kalman filter is not altered.

In the case in which a single signal - for example according to the case being analysed, only the motor command signal $I°_{motor,corr}$ - is provided at the input to the module 3, the first S and the second T correction coefficient of the Kalman filter gain $K_k$ are set equal to $S_{corr,current}$ and $T_{corr,current}$, respectively.

Note that advantageously the first S and the second T correction coefficients are such that the Kalman filter gain $K_k$ decreases as the difference between the first correction coefficient S and the second correction coefficient T increases, and increases as the difference between the second correction coefficient T and the first correction coefficient S increases.

As a result, if the weight resulting from the processing of the single signal, for example the motor command signal $I°_{motor,corr}$, is much greater than 1 (which corresponds to a condition of a high level of noise), the first correction coefficient S shall also be much greater than 1 and the second correction coefficient T shall tend towards 0. Therefore, as discussed above, the Kalman filter gain $K_k$ at the instant of time considered k shall also tend towards 0.

In the case in which a number of signals are provided at the input to the module 3, each one of the signals is treated in the same manner as stated for the motor command signal $I°_{motor,corr}$.

For example, with reference to the particular embodiment illustrated in Figure 3, the signals representative of the vertical acceleration $a_z$ and velocity $\omega_z$ about the z axis are treated in a manner similar to that described with reference to the motor command signal $I°_{motor,corr}$, although the gravitational acceleration value g (equal to 9.81 m/s$^2$) is preferably subtracted from the filtered vertical acceleration signal so as to obtain a null average signal.

For each signal, the correction coefficients associated with the specific signal $S_{corr,current}$, $S_{corr,Az}$, $S_{corr,\omega z}$ and $T_{corr,current}$, $T_{corr,Az}$, $T_{corr,\omega z}$ are calculated according to procedures stated above, and the final correction coefficients S and T shall be equal to the maximum value of the corrective coefficients $S_{corr,current}$, $S_{corr,Az}$ and $S_{corr,\omega z}$ and to the minimum value of the correction coefficients $T_{corr,current}$, $T_{corr,Az}$ and $T_{corr,\omega z}$, respectively.

Note that in this description and in the appended claims, the adaptive control system 1, as well as the elements indicated by the term "module", can be implemented by means of hardware devices (e.g. control units or processing units), by means of software or by means of a combination of hardware and software.

For example, the module 2 for slope estimation, the extended Kalman filter 4 and the module 3 for determining the correction parameters are implemented by means of a suitable software code running on a processing unit (e.g. a microprocessor or microcontroller) mounted on the bicycle 100, in particular inside the hub of the rear wheel 102.

Alternatively, the module 2 for slope estimation, the extended Kalman filter 4 and the module 3 for determining the correction parameters are implemented by means of one or more electronic circuits mounted on the bicycle 100, in particular by means of an integrated circuit mounted inside the hub of the rear wheel 102.

**Claims**

1. System (1) for estimating the slope ($\vartheta$) of a pedal-assisted bicycle comprising an electric motor (101) connected to a wheel (102) of the bicycle and one or more sensors/modules configured to generate signals representative of quantities relative to the bicycle, the system comprising:

   - a sensor for detecting the longitudinal speed ($V_x$) of the bicycle, said sensor being configured to generate a signal representative of the longitudinal speed of the bicycle;
   - an inertial measurement unit configured to measure the longitudinal ($a_x$), lateral ($a_y$) and vertical ($a_z$) accelerations and the angular velocities of roll ($\omega_x$), pitch ($\omega_y$) and yaw ($\omega_z$) of the bicycle and configured to generate signals representative of the longitudinal, lateral and vertical accelerations of the bicycle and of the angular velocities of roll, pitch and yaw of the bicycle;
   - a module (2) for estimating the slope ($\vartheta$) of the bicycle comprising:

     • an extended Kalman filter (4) configured to recursively calculate a gain ($K_k$) of the Kalman filter based on said signals representative of the longitudinal speed ($V_x$), the longitudinal ($a_x$), lateral ($a_y$) and vertical ($a_z$) accelerations and on the angular velocities of roll ($\omega_x$), pitch ($\omega_y$) and yaw ($\omega_z$) of the bicycle and configured to estimate said slope ($\vartheta$) of the bicycle based on said gain ($K_k$) of the Kalman filter;
     • a module (3) for determining correction parameters adapted to modify said gain ($K_k$) of the Kalman filter based on one or more of said signals representative of the quantities of the bicycle which affect said estimation of the inclination ($\vartheta$) performed by the extended Kalman filter (4);

   wherein the module (3) for determining correcting parameters (S, T) of the gain ($K_k$) of the Kalman filter is configured to determine a first (S) and a second (T) correction coefficient which are such that the gain ($K_k$) of the Kalman filter decreases as the difference between the first correction coefficient (S) and the second correction coefficient (T) increases, and increases as the difference between the second correction coefficient (T) and the first correction coefficient (S) increases.

2. System (1) according to claim 1, wherein said one or more signals representative of quantities relative to the bicycle which affect the estimation of the slope ($\vartheta$) performed by the extended Kalman filter (4) comprise at least one of the following signals:

   - a command signal ($I°_{motor,corr}$) of the motor (101) of the bicycle (100);
   - the signal representative of the vertical acceleration ($a_z$) of the bicycle;
   - the signal representative of the bangular velocity of the yaw ($\omega_z$) of the bicycle.

3. System (1) according to claim 1 or 2, wherein the module (3) for determining correcting parameters (S, T) of the gain ($K_k$) of the Kalman filter comprises one or more filters (5), each one being configured to filter an input signal of said one or more signals representative of the bicycle quantities which affect the estimation of the slope ($\vartheta$) performed by the extended Kalman filter (4).

4. System (1) according to the preceding claim, wherein said filter comprises a low-pass filter.

5. System (1) according to any of the previous claims, wherein said module (3) for determining the correction parameters (S, T) for the Kalman filter gain ($K_k$), in the presence of a single signal at the input to the module (3) among said one or more signals representative of the bicycle quantities which are such to affect said estimation of the slope ($\vartheta$) performed by the extended Kalman filter (4), is configured to:

   - determine the absolute value of said single input signal;
   - saturate said absolute value between 0 and a maximum value of said single input signal (max);
   - determine a weight (weightcurrent) representative of the entity of the noise associated with said single input signal based on the value of the latter between 0 and said maximum value (maxcurrent);
   - assign to the first correction coefficient (S) the value of said weight representative of the entity of the noise associated with the single input signal and assign to the second correction coefficient (T) the inverse of said weight representative of the entity of the noise associated with the single input signal.

6. System according to claim 5, wherein the signal at the input to the module (3) for determining the correction parameters is representative, alternatively:

- a motor command signal ($I°_{motor,corr}$) indicating that the electric motor of the bicycle is active;
- a signal representative of the vertical acceleration ($a_z$) of the bicycle due to the roughness of the road surface;
- a signal representative of the angular velocity ($\omega_z$) of the bicycle, in case wherein the bicycle is travelling around a curve.

**7.** System (1) according to any of the previous claims, wherein said module (3) for determining the correction parameters (S, T) for the gain ($K_k$) of the Kalman filter, in the presence of a plurality of signals at the input of the module (3), among said one or more signals representative of the quantities of the bicycle which are such to affect said estimation of the slope ($\vartheta$) performed by the extended Kalman filter (4), is configured to:

- determine the absolute value of each input signal;
- saturate said absolute value of each signal between 0 and a maximum value (max) of each input signal;
- determine a weight (weightcurrent, weight$_{Az}$, weight$_{\omega z}$) representative of the entity of the noise associated with each input signal based on the value of the latter between 0 and said maximum value (max);
- assign to a first correction coefficient associated with each input signal the value of said weight representative of the entity of the noise associated with each input signal, and assign to a second correction coefficient associated with each input signal the inverse of said weight representative of the entity of the noise associated with each input signal;

  - assing to said first correction coefficient (S) the maximum value among the first correction coefficients associated with input each signal and to said second correction coefficient (T) the minimum value among the second correction coefficients associated with each input signal.

**8.** System according to claim 7, wherein plurality of signals at the input of the module (3) for determining the correction parameters is selected from at least two of the followings:

- a motor command signal ($I°_{motor,corr}$) indicating that the electric motor of the bicycle is active;
- a signal representative of the vertical acceleration ($a_z$) of the bicycle due to the roughness of the road surface;
- a signal representative of the angular velocity ($\omega_z$) of the bicycle, in case wherein the bicycle is travelling around a curve.

**9.** A pedal-assisted bicycle (100) comprising a system (1) for estimating the slope ($\vartheta$) of the bicycle according to any one of the preceding claims.

**Patentansprüche**

**1.** System (1) zur Schätzung der Neigung ($\vartheta$) eines pedalunterstützten Fahrrads, umfassend einen Elektromotor (101), der mit einem Rad (102) des Fahrrads verbunden ist, und einen oder mehrere Sensoren/Module, die konfiguriert sind, um Signale zu erzeugen, die für Größen in Bezug auf das Fahrrad repräsentativ sind, wobei das System Folgendes umfasst:

- einen Sensor zum Erfassen der Längsgeschwindigkeit ($V_x$) des Fahrrads, wobei der Sensor konfiguriert ist, um ein Signal zu erzeugen, das für die Längsgeschwindigkeit des Fahrrads repräsentativ ist;
- eine Trägheitsmesseinheit, die dazu konfiguriert ist, die Längs- ($a_x$), Quer- ($a_y$) und Vertikalbeschleunigungen ($a_z$) und die Winkelgeschwindigkeiten von Roll ($\omega_x$), Nick ($\omega_y$) und Gier ($\omega_z$) des Fahrrads zu messen, und dazu konfiguriert ist, Signale zu erzeugen, die für die Längs- , Quer- und Vertikalbeschleunigungen des Fahrrads und für die Winkelgeschwindigkeiten von Roll, Nick und Gier des Fahrrads repräsentativ sind;
- ein Modul (2) zur Schätzung der Neigung ($\vartheta$) des Fahrrads, umfassend:

  • ein erweitertes Kalman-Filter (4), das konfiguriert ist, um rekursiv eine Verstärkung ($K_k$) des Kalman-Filters basierend auf den Signalen, die für die Längsgeschwindigkeit ($V_x$), die Längs- ($a_x$), Quer- ($a_y$) und Vertikalbeschleunigungen ($a_z$) repräsentativ sind und auf den Winkelgeschwindigkeiten von Roll ($\omega_x$), Nick ($\omega_y$) und Gier ($\omega_z$) des Fahrrads, zu berechnen und konfiguriert ist, um die Neigung ($\vartheta$) des Fahrrads basierend auf der Verstärkung ($K_k$) des Kalman-Filters zu schätzen;
  • ein Modul (3) zum Bestimmen von Korrekturparametern, die ausgelegt sind, um die Verstärkung ($K_k$) des

Kalman-Filters basierend auf einem oder mehreren der Signale zu modifizieren, die für die Größen des Fahrrads repräsentativ sind, die die Schätzung der Neigung ($\vartheta$) beeinflussen, die durch das erweiterte Kalman-Filter (4) durchgeführt wird;

wobei das Modul (3) zum Bestimmen von Korrekturparametern (S, T) der Verstärkung ($K_k$) des Kalman-Filters konfiguriert ist, um einen ersten (S) und einen zweiten (T) Korrekturkoeffizienten zu bestimmen, die derart sind, dass die Verstärkung ($K_k$) des Kalman-Filters abnimmt, wenn die Differenz zwischen dem ersten Korrekturkoeffizienten (S) und dem zweiten Korrekturkoeffizienten (T) zunimmt, und zunimmt, wenn die Differenz zwischen dem zweiten Korrekturkoeffizienten (T) und dem ersten Korrekturkoeffizienten (S) zunimmt.

2. System (1) nach Anspruch 1, wobei das eine oder die mehreren Signale, die für Größen in Bezug auf das Fahrrad repräsentativ sind, die die Schätzung der Neigung ($\vartheta$) beeinflussen, die durch das erweiterte Kalman-Filter (4) durchgeführt wird, mindestens eines der folgenden Signale umfassen:

- ein Befehlssignal ($I°_{motor,corr}$) des Motors (101) des Fahrrads (100);
- das für die Vertikalbeschleunigung ($a_z$) des Fahrrads repräsentative Signal;
- das für die Winkelgeschwindigkeit von Gier ($\omega_z$) des Fahrrads repräsentative Signal.

3. System (1) nach Anspruch 1 oder 2, wobei das Modul (3) zum Bestimmen von Korrekturparametern (S, T) der Verstärkung ($K_k$) des Kalman-Filters ein oder mehrere Filter (5) umfasst, wobei ein jedes so konfiguriert ist, dass es ein Eingangssignal des einen oder der mehreren Signale filtert, die für die Fahrradgrößen repräsentativ sind, die die durch das erweiterte Kalman-Filter (4) durchgeführte Schätzung der Neigung ($\vartheta$) beeinflussen.

4. System (1) nach dem vorhergehenden Anspruch, wobei das Filter ein Tiefpassfilter umfasst.

5. System (1) nach einem der vorhergehenden Ansprüche, wobei das Modul (3) zum Bestimmen der Korrekturparameter (S, T) für die Kalman-Filterverstärkung ($K_k$) bei Vorhandensein eines einzelnen Signals am Eingang des Moduls (3) unter dem einen oder den mehreren Signalen, die für die Fahrradgrößen repräsentativ sind, die derart sind, dass sie die durch das erweiterte Kalman-Filter (4) durchgeführte Schätzung der Neigung ($\vartheta$) beeinflussen, konfiguriert ist, um:

- den Absolutwert des einzelnen Eingangssignals zu bestimmen;
- den Absolutwert zwischen 0 und einem Maximalwert des einzelnen Eingangssignals (max) zu sättigen;
- ein Gewicht ($weight_{current}$) zu bestimmen, das für das Ausmaß des Lärms repräsentativ ist, der mit dem einzelnen Eingangssignal assoziiert ist, basierend auf dem Wert des letzteren zwischen 0 und dem Maximalwert ($max_{current}$);
- dem ersten Korrekturkoeffizienten (S) den Wert des Gewichtes zuzuweisen, der für das Ausmaß des Lärms repräsentativ ist, der mit dem einzelnen Eingangssignal assoziiert ist, und dem zweiten Korrekturkoeffizienten (T) den Kehrwert des Gewichtes zuzuweisen, der für das Ausmaß des Lärms repräsentativ ist, der mit dem einzelnen Eingangssignal assoziiert ist.

6. System nach Anspruch 5, wobei das Signal am Eingang des Moduls (3) zum Bestimmen der Korrekturparameter repräsentativ ist, alternativ:

- für ein Motorbefehlssignal ($I°_{motor,corr}$), das anzeigt, dass der Elektromotor des Fahrrads aktiv ist;
- für ein Signal, das für die Vertikalbeschleunigung ($a_z$) des Fahrrads aufgrund der Rauheit der Straßenoberfläche repräsentativ ist;
- für ein Signal, das für die Winkelgeschwindigkeit ($\omega_z$) des Fahrrads repräsentativ ist, falls das Fahrrad um eine Kurve fährt.

7. System (1) nach einem der vorhergehenden Ansprüche, wobei das Modul (3) zum Bestimmen der Korrekturparameter (S, T) für die Verstärkung ($K_k$) des Kalman-Filters bei Vorhandensein einer Vielzahl von Signalen am Eingang des Moduls (3) unter dem einen oder den mehreren Signalen, die für die Größen des Fahrrads repräsentativ sind, die derart sind, dass sie die durch das erweiterte Kalman-Filter (4) durchgeführte Schätzung der Neigung ($\vartheta$) beeinflussen, konfiguriert ist, um:

- den Absolutwert eines jeden Eingangssignals zu bestimmen;

- den Absolutwert eines jeden Signals zwischen 0 und einem Maximalwert (max) eines jeden Eingangssignals zu sättigen;
- ein Gewicht (weightcurrent, weight$_{Az}$, weight$_{\omega z}$) zu bestimmen, das für das Ausmaß des Lärms repräsentativ ist, der mit einem jeden Eingangssignal assoziiert ist, basierend auf dem Wert des letzteren zwischen 0 und dem Maximalwert (max);
- einem ersten Korrekturkoeffizienten, der mit einem jeden Eingangssignal assoziiert ist, den Wert des Gewichts zuzuweisen, der für das Ausmaß des Lärms, der mit einem jeden Eingangssignal assoziiert ist, repräsentativ ist, und einem zweiten Korrekturkoeffizienten, der mit einem jeden Eingangssignal assoziiert ist, den Kehrwert des Gewichts zuzuweisen, der für das Ausmaß des Lärms, der mit einem jeden Eingangssignal assoziiert ist, repräsentativ ist;
- dem ersten Korrekturkoeffizienten (S) den Maximalwert unter den ersten Korrekturkoeffizienten, die mit einem jeden Eingangssignal assoziiert sind und dem zweiten Korrekturkoeffizienten (T) den Minimalwert unter den zweiten Korrekturkoeffizienten, die mit einem jeden Eingangssignal assoziiert sind, zuzuweisen.

8. System nach Anspruch 7, wobei eine Vielzahl von Signalen am Eingang des Moduls (3) zum Bestimmen der Korrekturparameter aus mindestens zwei der folgenden ausgewählt wird:

   - einem Motorbefehlssignal (I°$_{motor,corr}$), das anzeigt, dass der Elektromotor des Fahrrads aktiv ist;
   - einem Signal, das für die Vertikalbeschleunigung (a$_z$) des Fahrrads aufgrund der Rauheit der Straßenoberfläche repräsentativ ist;
   - einem Signal, das für die Winkelgeschwindigkeit (ω$_z$) des Fahrrads repräsentativ ist, falls das Fahrrad um eine Kurve fährt.

9. Pedalunterstütztes Fahrrad (100), das ein System (1) zur Schätzung der Neigung ($\vartheta$) des Fahrrads nach einem der vorhergehenden Ansprüche umfasst.

**Revendications**

1. Système (1) d'estimation de la pente ($\vartheta$) d'une bicyclette à pédalage assisté comprenant un moteur électrique (101) relié à une roue (102) de la bicyclette et un ou plusieurs capteurs/modules configurés pour générer des signaux représentatifs de grandeurs relatives à la bicyclette, le système comprenant :

   - un capteur servant à détecter la vitesse longitudinale (V$_x$) de la bicyclette, ledit capteur étant configuré pour générer un signal représentatif de la vitesse longitudinale de la bicyclette ;
   - une unité de mesure inertielle configurée pour mesurer les accélérations longitudinale (a$_x$), latérale (a$_y$) et verticale (a$_z$) et les vitesses angulaires de balancement (ω$_x$), d'assiette (ω$_y$) et de mouvement de lacet (ω$_z$) de la bicyclette et configurée pour générer des signaux représentatifs des accélérations longitudinale, latérale et verticale de la bicyclette et des vitesses angulaires de balancement, d'assiette et de mouvement de lacet de la bicyclette ;
   - un module (2) d'estimation de la pente ($\vartheta$) de la bicyclette comprenant :

     • un filtre de Kalman étendu (4) configuré pour calculer récursivement un gain (K$_k$) du filtre de Kalman sur la base desdits signaux représentatifs de la vitesse longitudinale (V$_x$), des accélérations longitudinale (a$_x$), latérale (a$_y$) et verticale (a$_z$) et des vitesses angulaires de balancement (ω$_x$), d'assiette (ω$_y$) et de mouvement de lacet (ω$_z$) de la bicyclette et configuré pour estimer ladite pente ($\vartheta$) de la bicyclette sur la base dudit gain (K$_k$) du filtre de Kalman ;

     • un module (3) servant à déterminer des paramètres de correction adaptés pour modifier ledit gain (K$_k$) du filtre de Kalman sur la base d'un ou plusieurs desdits signaux représentatifs des grandeurs de la bicyclette qui affectent ladite estimation de l'inclinaison ($\vartheta$) effectuée par le filtre de Kalman étendu (4) ;

     dans lequel le module (3) servant à déterminer les paramètres de correction (S, T) du gain (K$_k$) du filtre de Kalman est configuré pour déterminer un premier (S) et un second (T) coefficient de correction étant tels que le gain (K$_k$) du filtre de Kalman diminue lorsque la différence entre le premier coefficient de correction (S) et le second coefficient de correction (T) augmente, et augmente lorsque la différence entre le second coefficient de correction (T) et le premier coefficient de correction (S) augmente.

**2.** Système (1) selon la revendication 1, dans lequel lesdits un ou plusieurs signaux représentatifs de grandeurs relatives à la bicyclette qui affectent l'estimation de la pente ($\vartheta$ $\vartheta$) effectuée par le filtre de Kalman étendu (4) comprennent au moins un des signaux suivants :

- un signal de commande ($I^{\circ}_{motor,corr}$) du moteur (101) de la bicyclette (100) ;
- le signal représentatif de l'accélération verticale ($a_z$) de la bicyclette ;
- le signal représentatif de la vitesse angulaire du mouvement de lacet ($\omega_z$) de la bicyclette.

**3.** Système (1) selon la revendication 1 ou 2, dans lequel le module (3) de détermination des paramètres de correction (S, T) du gain ($K_k$) du filtre de Kalman comprend un ou plusieurs filtres (5), chacun étant configuré pour filtrer un signal d'entrée desdits un ou plusieurs signaux représentatifs des grandeurs de la bicyclette qui affectent l'estimation de la pente ($\vartheta$ $\vartheta$) réalisée par le filtre de Kalman étendu (4).

**4.** Système (1) selon la revendication précédente, dans lequel ledit filtre comprend un filtre passe-bas.

**5.** Système (1) selon l'une quelconque des revendications précédentes, dans lequel ledit module (3) de détermination des paramètres de correction (S, T) du gain du filtre de Kalman ($K_k$), en présence d'un signal unique à l'entrée du module (3) parmi lesdits un ou plusieurs signaux représentatifs des grandeurs de bicyclette qui sont de nature à affecter ladite estimation de la pente ($\vartheta$ $\vartheta$) réalisée par le filtre de Kalman étendu (4), est configuré pour :

- déterminer la valeur absolue dudit signal d'entrée unique ;
- saturer ladite valeur absolue entre 0 et une valeur maximale dudit signal d'entrée unique (max) ;
- déterminer un poids ($weight_{current}$) représentatif de l'entité du bruit associé audit signal d'entrée unique sur la base de la valeur de ce dernier entre 0 et ladite valeur maximale ($max_{current}$) ;
- attribuer au premier coefficient de correction (S) la valeur dudit poids représentatif de l'entité du bruit associé au signal d'entrée unique et attribuer au second coefficient de correction (T) l'inverse dudit poids représentatif de l'entité du bruit associé au signal d'entrée unique.

**6.** Système selon la revendication 5, dans lequel le signal à l'entrée du module (3) servant à déterminer les paramètres de correction est représentatif, alternativement :

- d'un signal de commande du moteur ($I^{\circ}_{motor,corr}$) indiquant que le moteur électrique de la bicyclette est actif ;
- d'un signal représentatif de l'accélération verticale ($a_z$) de la bicyclette due à la rugosité de la surface de la route ;
- d'un signal représentatif de la vitesse angulaire ($\omega_z$) de la bicyclette, dans le cas où la bicyclette se déplace dans une courbe.

**7.** Système (1) selon l'une quelconque des revendications précédentes, dans lequel ledit module (3) de détermination des paramètres de correction (S, T) du gain ($K_k$) du filtre de Kalman, en présence d'une pluralité de signaux à l'entrée du module (3), parmi lesdits un ou plusieurs signaux représentatifs des grandeurs de la bicyclette qui sont de nature à affecter ladite estimation de la pente ($\vartheta$ $\vartheta$) réalisée par le filtre de Kalman étendu (4), est configuré pour :

- déterminer la valeur absolue de chaque signal d'entrée ;
- saturer ladite valeur absolue de chaque signal entre 0 et une valeur maximale (max) de chaque signal d'entrée ;
- déterminer un poids ($weight_{current}$, $weight_{Az}$, $weight_{\omega z}$) représentatif de l'entité du bruit associé à chaque signal d'entrée en fonction de la valeur de ce dernier entre 0 et ladite valeur maximale (max) ;
- attribuer à un premier coefficient de correction associé à chaque signal d'entrée la valeur dudit poids représentatif de l'entité du bruit associé à chaque signal d'entrée, et attribuer à un deuxième coefficient de correction associé à chaque signal d'entrée l'inverse dudit poids représentatif de l'entité du bruit associé à chaque signal d'entrée ;
- attribuer audit premier coefficient de correction (S) la valeur maximale parmi les premiers coefficients de correction associés à chaque signal d'entrée et audit second coefficient de correction (T) la valeur minimale parmi les seconds coefficients de correction associés à chaque signal d'entrée.

**8.** Système selon la revendication 7, dans lequel la pluralité de signaux à l'entrée du module (3) de détermination des paramètres de correction est choisie parmi au moins deux des signaux suivants :

- un signal de commande du moteur ($I°_{motor,corr}$) indiquant que le moteur électrique de la bicyclette est actif ;
- un signal représentatif de l'accélération verticale ($a_z$) de la bicyclette due à la rugosité de la surface de la route ;
- un signal représentatif de la vitesse angulaire ($\omega_z$) de la bicyclette, dans le cas où la bicyclette se déplace dans une courbe.

9. Bicyclette à pédalage assisté (100) comprenant un système (1) d'estimation de la pente ($\vartheta$) de la bicyclette selon l'une quelconque des revendications précédentes.

## Fig. 1

## Fig. 2

3

max

S

$T_{corr,current}$

$1/u$

$S_{corr,current}$

$\dfrac{weight_{current}}{max_{current}}$

1

$max_{current}$

0

$|u|$

$\underline{5}$

$I^0_{motor,corr}$

min

T

$T_{corr,Az}$

$1/u$

$S_{corr,Az}$

$\dfrac{weight_{Az}}{max_{Az}}$

1

$max_{Az}$

0

$|u|$

9.81

$\underline{5}$

$a_z$

$T_{corr,\omega z}$

$1/u$

$S_{corr,\omega z}$

$\dfrac{weight_{\omega z}}{max_{\omega z}}$

1

$max_{\omega z}$

0

$|u|$

$\underline{5}$

$\omega_z$

Fig. 3

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2016167732 A1

**Non-patent literature cited in the description**

- **IVO BONIOLO ; STEFANO CORBETTA ; SERGIO SAVARESI.** Attitude estimation of a motorcycle in a Kalman filtering framework. *Advances in Automotive Control,* 2010, 779-784

- **SERGIO SAVARESI ; IVO BONIOLO.** Estimate of the lean angle of motorcycles. VDM Verlag, 2010